(19) Europäisches Patentamt / European Patent Office / Office européen des brevets

(11) **EP 1 354 218 B1**

(12) **FASCICULE DE BREVET EUROPEEN**

(45) Date de publication et mention
de la délivrance du brevet:
**12.03.2008 Bulletin 2008/11**

(21) Numéro de dépôt: **01271548.8**

(22) Date de dépôt: **04.12.2001**

(51) Int Cl.:
*G01S 7/52* (2006.01)   *G01S 15/89* (2006.01)

(86) Numéro de dépôt international:
**PCT/FR2001/003827**

(87) Numéro de publication internationale:
**WO 2002/050566 (27.06.2002 Gazette 2002/26)**

(54) **ANTENNE SONAR SYNTHETIQUE INTERFEROMETRIQUE**

INTERFEROMETISCHE SYNTHETISCHE SONARANTENNE

INTERFEROMETRIC SYNTHETIC SONAR ANTENNA

(84) Etats contractants désignés:
**DE GB**

(30) Priorité: **19.12.2000 FR 0016591**

(43) Date de publication de la demande:
**22.10.2003 Bulletin 2003/43**

(73) Titulaire: **Thales**
**75008 Paris (FR)**

(72) Inventeur: **BILLON, Didier**
**Thales Intellectual Property**
**F-94117 Arcueil Cedex (FR)**

(74) Mandataire: **Lucas, Laurent Jacques**
**Marks & Clerk France**
**31-33 Avenue Aristide Briand**
**94117 Arcueil Cedex (FR)**

(56) Documents cités:
**FR-A- 2 738 918    FR-A- 2 756 931**
**FR-A- 2 769 372    US-A- 4 400 803**

- **BILLON D ET AL: "Theoretical performance and experimental results for synthetic aperture sonar self-calibration" IEEE OCEANIC ENGINEERING SOCIETY. OCEANS'98. CONFERENCE PROCEEDINGS (CAT. NO.98CH36259), NICE, FRANCE, 28 SEPT.-1 OCT. 1998, pages 965-970 vol.2, XP002177327 1998, New York, NY, USA, IEEE, USA ISBN: 0-7803-5045-6 cité dans la demande**

## EP 1 354 218 B1

**Description**

La présente invention se rapporte aux antennes sonars interférométriques qui sont utilisées pour former une antenne synthétique et plus particulièrement à l'autocalibration d'une telle antenne synthétique.

Les antennes synthétiques sont bien connues, tant dans le domaine des radars que celui des sonars, et l'autocalibration de telles antennes est une technique elle-même connue, décrite en particulier dans un article de Didier BILLON et Franck FOHANNO de la société THOMSON MARCONI SONAR SAS publié dans les actes de OCEAN 98 par IEEE aux pages 965 à 970.

Pour réaliser l'autocalibration d'une antenne synthétique il est connu d'utiliser des techniques diverses.

Le document US-A-4 400 803 décrit ainsi une antenne sonar synthétique et interférométrique permettant de combiner les signaux de deux antennes réseaux superposées en connaissant le décalage temporel entre les réseaux supérieur et inférieur, afin de calculer par des techniques interférométriques classiques, grâce à l'information de site, la profondeur et la distance oblique d'une m êm e case distance vue par les deux réseaux.

Le document FR 2 769 372 décrit par ailleurs un sonar à antenne synthétique interférométrique utilisant une antenne supplémentaire dans le plan vertical. Cette antenne supplémentaire permet d'effectuer une mesure de l'angle de site du signal rétrodiffusé par le fond grâce à sa directivité verticale.

Le document FR 2 738 91 8 se rapporte, quant à lui, au traitement d'autofocalisation d'une antenne synthétique unique, traitement utilisant des émissions auxiliaires dédiées pour effectuer la compensation de mouvement nécessaire au fonctionnement en mode synthétique. Le traitement divulgué utilise des centrales inertielles et effectue la corrélation des points réfléchis entre deux récurrences successives d'autofocalisation.

Le principe de l'invention consiste quant à lui:

- à décaler les deux réseaux de l'interféromètre l'un par rapport à l'autre parallèlement à eux-mêmes d'une distance égale à la moitié du pas séparant les capteurs de façon à permettre l'élargissement du secteur d'émission sans augmentation du nombre de capteurs de l'antenne,
- à former par traitement des signaux des capteurs des deux réseaux un réseau dit unifié.

Avec ce principe, on améliore la résolution en gisement du traitement d'antenne synthétique.

L'invention propose une antenne sonar synthétique interférométrique dont l'antenne de réception comprend deux réseaux linéaires identiques parallèles superposés à pas constant entre capteurs, caractérisée en ce que les deux réseaux (101,102) sont décalés l'un par rapport à l'autre paralèllement à eux-mêmes d'une distance égale à la moitié du pas séparant les capteurs et que des signaux issus de ces capteurs sont traités pour former un réseau dit unifié en estimant le retard de propagation entre les deux réseaux (101, 102), le réseau unifié présentant un pas entre capteur égal à la moitié du pas présenté par chacun des réseaux (101, 102) de sorte que l'antenne soit apte à fonctionner avec un secteur d'émission élargi par rapport à celui compatible de chacun des réseaux, le réseau unifié étant exploité dans un traitement d'antenne synthétique.

D'autres particularités et avantages de l'invention apparaîtront clairement dans la description suivante, présentée à titre d'exemple non limitatif en regard de la figure annexée qui représente le schéma de l'antenne de réception à réseaux décalés.

Dans la suite de la description,le terme "antenne" utilisé seul est relatif à "antenne de réception".

L'autocalibration d'une antenne synthétique basée sur la corrélation inter-récurrences consiste à estimer une longueur $L$ d'un déplacement parallèle à l'antenne, un retard $\tau$ entre deux signaux corrélés, et une variation de gisement $\beta$ induite par la rotation de l'antenne, à partir de signaux de deux récurrences successives reçus sur deux intervalles temporels correspondant à un même intervalle de distance, et suffisamment petits pour que ces paramètres puissent être supposés constants. La longueur $L$ est la somme, d'une part, des longueurs des composantes parallèles à l'antenne du déplacement entre les deux instants d'émission successifs, et d'autre part, du déplacement entre deux instants de réception relatifs au centre de l'intervalle de distance considéré. Si $O\xi$ est l'axe de l'antenne orienté dans le sens du déplacement, l'autocalibration est basée sur la corrélation entre le signal reçu au point d'abscisse $\xi$ à la première récurrence et au point d'abscisse $\xi - L$ à la deuxième récurrence.

La précision des estimées dépend notamment du nombre de couples d'abscisses sur l'antenne $(\xi,\xi - L)$ tels que le champ acoustique incident généré par la réverbération du fond de la mer aient des valeurs indépendantes aux abscisses $\xi$ comprises entre $\xi_1 + L$ et $\xi_M$, $\xi_1$ et $\xi_M$ étant les abscisses des centres de phase des capteurs extrêmes de l'antenne.

Le nombre de valeurs indépendantes du champ acoustique le long de l'antenne de réception est égale au rapport entre la longueur de l'antenne et la longueur de corrélation du champ le long de l'antenne, laquelle est égale au rapport $\lambda/\Delta\theta$ de la longueur d'onde $\lambda$ et de la largeur en gisement $\Delta\theta$ du secteur d'émission. Cette largeur du secteur d'émission détermine par ailleurs la limite de résolution de l'antenne synthétique :

$$\delta_{\min} = \frac{\lambda}{2(\Delta\theta - \Delta\varphi)}$$

où $\Delta\varphi$ est la réduction équivalente du secteur d'émission causée par la rotation de la plate-forme sur la durée de formation de l'antenne synthétique.

Le pas entre les capteurs de l'antenne de réception doit être inférieur à cette longueur de corrélation du champ, le rapport entre les deux longueurs ayant en pratique une valeur de l'ordre de 1,5. Autrement dit, le nombre de capteurs doit être supérieur au nombre de valeurs indépendantes du champ incident le long de l'antenne dans le même rapport.

Ainsi augmenter le nombre de valeurs indépendantes du champ le long de l'antenne, implique dans l'art connu de réduire le pas entre capteurs, donc d'en augmenter le nombre. L'invention vise à obtenir le même effet sans augmentation du nombre de capteurs.

Selon l'art connu pour un sonar à antenne synthétique interférométrique, on exploite deux réseaux linéaires identiques parallèles superposés, l'un étant obtenu par translation de l'autre suivant un axe $O\zeta$ perpendiculaire aux deux réseaux.

Selon l'invention, comme représenté sur la figure, on modifie cette configuration en décalant les deux réseaux 101, 102 parallèlement à eux-mêmes, suivant l'axe $O\xi$, de la moitié du pas entre capteurs. On génère ainsi à partir des signaux des deux réseaux les signaux d'un réseau linéaire de même longueur mais ayant deux fois plus de capteurs que chacun des deux réseaux, donc un pas réduit de moitié, en exploitant la relation connue:

$$s_{\sup}(\xi,t) \approx s_{\inf}(\xi, t - \tau_{int}(t)) \cdot \exp(-\,j2\pi f_0 \tau_{int}(t)) \cdot$$

où $s_{\inf}(\xi,t)$ et $s_{\sup}(\xi,t)$ sont les amplitudes complexes de signaux de capteurs dont les centres de phase auraient l'abscisse $\xi$ respectivement sur le réseau inférieur et sur le réseau supérieur, $f_0$ est la fréquence de démodulation égale à la fréquence centrale de l'émission, et $\tau_{int}(t)$ le retard de propagation entre les deux réseaux.

Pour simplifier l'exposé, on suppose que la variation de l'angle entre une direction d'arrivée et l'axe $O\zeta$ (angle de site) dans le secteur du champ incident à un instant fixé $t$ est suffisamment faible pour négliger la variation correspondante du retard $\tau_{int}(t)$, celle-ci devant être alors très inférieure à $1/f_0$. Cette hypothèse, qui ne restreint pas la généralité de l'invention, est le plus souvent satisfaite en pratique.

Selon l'invention, les signaux du réseau constitué des $M$ capteurs du réseau supérieur, ayant leurs centres de phase aux abscisses $\xi_{\sup,1},...,\xi_{\sup,M}$ et des $M$ capteurs intermédiaires dont les centres de phase auraient les mêmes abscisses $\xi_{\inf,1},...,\xi_{\inf,M}$ que celles des centres de phase du réseau inférieur, sont traités de la manière décrite maintenant.

On suppose par exemple que le décalage est dans la direction inverse de $O\xi$ comme sur la figure. Soient $s_m(t)$, $1\le m\le M$, les amplitudes complexes définies par les expressions

$$s_m(t) = s_{\sup}\left(\xi_{\sup,1+(m-1)/2},t\right)$$

pour m impair,

$$s_m(t) = s_{\inf}\left(\xi_{\inf,m/2}, t - \hat{\tau}_{int}(t)\right).\exp\left(-\,j2\pi f_0 \hat{\tau}_{int}(t)\right)$$

pour m pair.

Le traitement des signaux issus des capteurs des deux réseaux consiste à calculer une estimée $\hat{\tau}_{int}(t)$ du retard $\tau_{int}(t)$ par exemple au moyen de l'expression

$$\hat{\tau}_{int}(t) = \arg\max_{\tau} \mathrm{Re}\left( \int_{t-\Delta t/2}^{t+\Delta t/2} \int_{-\Delta\theta/2}^{+\Delta\theta/2} S_{\sup}(\theta,u) \cdot S_{\inf}(\theta, u-\tau)^{\cdot} \cdot \exp(j2\pi f_0 \tau) \cdot \mathrm{d}\theta \cdot \mathrm{d}u \right)$$

où $S_{\text{inf}}(\theta,t)$ et $S_{\text{sup}}(\theta,t)$ sont les signaux d'une voie de l'antenne inférieure et d'une voie de l'antenne supérieure orientées dans le gisement $\theta$ □et dont les centres de phase ont une même abscisse sur l'axe O$\xi$.

De manière générale, on a pour tout réseau parallèle aux deux réseaux physiques et situés dans le même plan, les relations :

$$s_m(t) = s_{\text{sup}}\left(\xi_{\text{sup},1+(m-1)/2}, t + \hat{\tau}_{\text{int,sup}}(t)\right)\exp\left(j2\pi f_0 \hat{\tau}_{\text{int,sup}}(t)\right)$$

pour m impair,

$$s_m(t) = s_{\text{inf}}\left(\xi_{\text{inf},m/2}, t - \hat{\tau}_{\text{int,inf}}(t)\right).\exp\left(-j2\pi f_0 \hat{\tau}_{\text{int,inf}}(t)\right)$$

pour m pair,
avec

$$\hat{\tau}_{\text{int,inf}}(t) + \hat{\tau}_{\text{int,sup}}(t) = \hat{\tau}_{\text{int}}(t).$$

Pour des facilités de langage, l'inventeur a dénommé un tel réseau "réseau unifié". L'invention propose d'exploiter ce réseau selon deux modes de fonctionnement distincts.

Dans un premier mode de fonctionnement, le réseau unifié permet d'améliorer la résolution de l'antenne synthétique en imagerie seule. En effet un sonar à antenne synthétique interférométrique peut remplir simultanément deux fonctions : l'imagerie, consistant à produire des images de l'intensité de la rétrodiffusion acoustique du fond marin, et la bathymétrie, consistant à produire des cartes de relief du fond marin, ces deux fonctions bénéficiant de la résolution en gisement du traitement d'antenne synthétique.

L'invention propose donc un mode supplémentaire où, en contrepartie de l'abandon de l'interférométrie, on obtient l'imagerie avec une résolution améliorée par rapport au mode connu où les deux fonctions coexistent. Dans ce mode supplémentaire, on élargit le secteur d'émission. Cet élargissement est obtenu de manière connue en diminuant la largeur de la pupille de l'antenne d'émission, qui peut être distincte de l'antenne de réception. La largeur du secteur d'émission, donc le nombre de valeurs indépendantes du champ le long de l'antenne, peuvent par exemple être doublés. On effectue alors le traitement d'antenne synthétique sur le réseau unifié de la même façon qu'on le ferait sur un réseau ayant réellement deux fois plus de capteurs que chacun chacun des deux réseaux de l'interféromètre.

Le deuxième mode de fonctionnement se rapporte aux techniques d'antenne synthétique qui utilisent des émissions auxiliaires telles que décrites dans le brevet N° 95 10953 déposé le 19.09.95 par la société THOMSON-CSF.

On considère donc un Interféromètre à réseaux décalés associé à un dispositif d'émissions auxiliaires. Les paramètres $L$ et $\beta$ d'autocalibration de chacune des deux antennes synthétiques associées aux deux réseaux sont identiques. Quant aux troisièmes paramètres, notés respectivement $\tau_{\text{inf}}$ et $\tau_{\text{sup}}$ pour l'antenne synthétique inférieure et l'antenne synthétique supérieure, ils satisfont la relation

$$\tau_{\text{inf}} = \tau_{\text{sup}} - \tau_{\text{int},2} + \tau_{\text{int},1}$$

où $\tau_{\text{int},1}$ et $\tau_{\text{int},2}$ sont les retards de propagation entre les deux réseaux à la-première et à la deuxième-récurrence du couple de deux récurrences successives traitées par l'autocalibration, comme décrit dans l'article de l'inventeur publié dans les actes de l'European Conference on Underwaters Acoustics 2000 aux pages 419 à 424.

Par rapport à l'art antérieur, le secteur en gisement des émissions auxiliaires, les seules exploitées par l'autocalibration, est plus large, ce qui revient à avoir une longueur d'antenne d'émission plus petite selon l'art connu. Quant à la largeur du secteur en gisement de l'émission principale servant à la formation de l'antenne synthétique, elle reste la même.

L'autocalibration est effectuée sur le seul réseau unifié, dont les signaux sont générés comme décrit précédemment. Si, par exemple, la largeur du secteur en gisement des émissions auxiliaires est doublée, la précision d'interpolation spatiale sur le réseau unifié est la même que celle obtenue précédemment sur les deux réseaux. Dans l'exemple où le réseau unifié à la même coordonnée sur O$\zeta$ que le réseau supérieur, on obtient ainsi des estimées de

*L*, $\tau_{sup}$ et β plus précises que celles qui seraient obtenues sur ce réseau supérieur avec le procédé classique.

On estime aussi $\tau_{int,1}$ et $\tau_{int,2}$ à partir des signaux des deux réseaux, séparément sur les deux récurrences. Cette estimation sera nettement plus précise que celle de $\tau_{sup}$ car, d'une part la corrélation des champs acoustiques des deux antennes sur une même récurrence est en général supérieure à la corrélation inter-récurrences des champs acoustiques d'une même antenne, et d'autre part elle peut exploiter les signaux à la fréquence principale et aux deux fréquences auxiliaires. De ce fait, on obtient au moyen de la relation précédente une estimée de $\tau_{inf}$ dont l'erreur a comme principale composante l'erreur de l'estimée de $\tau_{sup}$.

Le gain de résolution permis par ce procédé résulte essentiellement de la meilleure précision d'estimation du paramètre β (on pourra se reporter à l'article cité page 1). Il est particulièrement important quand l'intersection des secteurs des émissions auxiliaires de deux récurrences successives, qui représente le secteur angulaire exploitable par l'autocalibration, est fortement réduit par la rotation de la plate-forme. Doubler la largeur du secteur d'émission fait alors plus que doubler le nombre de valeurs indépendantes du champ acoustique le long de l'antenne. Cette considération s'applique aussi dans le premier mode de fonctionnement du réseau unifié décrit plus haut.

Supposons par exemple que la résolution désirée $\delta_{min}$ soit égale à 30λ, que la durée de récurrence soit $T_r$ = 2 s (portée 1500 m), et que la plate-forme soit affectée d'une rotation sinusoïdale d'amplitude $\varphi_{max}$ = 2° et de période $T_\varphi$ = 6 s dans le plan de visée. La rotation maximale sur la durée de formation de l'antenne synthétique Δφ est égale à $2\varphi_{max}$ = 4°. La largeur du secteur d'émission nécessaire à la formation de l'antenne synthétique est Δθ = λ/2$\delta_{min}$ + Δφ soit 5°. La largeur minimale du secteur exploité par l'autocalibration, qui est l'intersection des secteurs de deux émissions successives, est :

$$\underbrace{\Delta\theta - 2\varphi_{max}\sin(\pi\frac{T_r}{T_\varphi})}_{\approx 3,5°}$$

ce qui donne dans cet exemple 1,5°.

Avec le procédé selon l'invention, la largeur du secteur des émissions auxiliaires peut alors être dans cet exemple de 10°, celle du secteur exploitable par l'autocalibration étant alors au moins de 10° - 3,5° = 6,5°, soit plus de 4 fois la largeur minimale du secteur exploité dans le procédé classique L'écart type de l'erreur affectant un paramètre d'autocalibration est Inversement proportionnel à la racine carrée de la largeur du secteur exploité par l'autocalibration si cette largeur est suffisante. Ainsi est-il réduit par un facteur pouvant atteindre 2 dans l'exemple choisi. Dans les cas défavorables où la rotation de l'antenne réduit excessivement la largeur du secteur exploité par l'autocalibration, l'écart type varie plus rapidement en fonction de cette largeur, donc le gain de précision apporté par l'invention est encore plus important.

**Revendications**

**1.** Antenne sonar synthétique interférométrique dont l'antenne de réception comprend deux réseaux linéaires identiques parallèles superposés à pas constant entre capteurs, dans laquelle ces deux réseaux (101,102) sont décalés l'un par rapport à l'autre parallèlement à eux-mêmes d'une distance égale à la moitié du pas séparant les capteurs, **caractérisée en ce que** des signaux issus de ces capteurs sont traités pour former un réseau dit unifié en estimant le retard de propagation entre les deux réseaux (101, 102), le réseau unifié présentant un pas entre capteur égal à la moitié du pas présenté par chacun des réseaux (101, 102) de sorte que l'antenne soit apte à fonctionner avec un secteur d'émission élargi par rapport à celui compatible de chacun des réseaux, le réseau unifié étant exploité dans un traitement d'antenne synthétique.

**2.** Antenne selon la revendication 1, **caractérisée en ce que**, dans un mode particulier d'imagerie non interférométrique, le secteur d'émission en gisement est élargi, et que le réseau unifié est exploité pour la formation d'une antenne synthétique.

**3.** Antenne selon la revendication 1, dans laquelle on utilise des émissions auxiliaires pour effectuer l'autocalibration, **caractérisée en ce que** le secteur en gisement d'au moins une émission auxiliaire est plus large que celui qui correspond à l'émission principale, et que le réseau unifié est exploité pour effectuer l'autocalibration des deux antennes synthétiques formées avec les signaux reçus résultant de l'ém ission principale.

**Claims**

1.  Interferometric synthetic sonar antenna, the reception antenna of which comprises two superimposed, identical parallel linear arrays with a constant pitch between sensors, in which these two arrays (101, 102) are offset relative to each other and parallel to themselves by a distance equal to half the pitch between the sensors, **characterized in that** signals coming from these sensors are processed to form an array known as a unified array by estimating the propagation delay between the said two arrays (101, 102), said unified array presenting a pitch between the sensors equal to half the pitch presented by each of the arrays, so that the antenna is able to operate with a transmission sector that is broadened with respect to that compatible with each of the arrays, the unified array being utilized in a synthetic antenna processing operation.

2.  Antenna according to Claim 1, **characterized in that**, in a particular mode of non-interferometric imaging, the transmission sector, in bearing, is broadened and **in that** the unified array is exploited to forma synthetic antenna.

3.  Antenna according to Claim 1, in which auxiliary transmissions are used to carry out the self-calibration, **characterized in that** the bearing sector of at least one auxiliary transmission is broader than the one corresponding to the main transmission, and **in that** the unified array is exploited to carry out the self-calibration of the two synthetic antennas formed with the received signals resulting from the main transmission.


**Patentansprüche**

1.  Interferometrische synthetische Sonarantenne, deren Empfangsantenne zwei übereinanderliegende parallele gleiche lineare Netze mit konstantem Abstand zwischen Sensoren aufweist, bei der diese zwei Netze (101, 102) zueinander parallel zu sich selbst um eine Entfernung gleich der Hälfte des die Sensoren trennenden Abstands verschoben sind, **dadurch gekennzeichnet, dass** von diesen Sensoren stammende Signale verarbeitet werden, um ein so genanntes vereintes Netz zu bilden, indem die Ausbreitungsverzögerung zwischen den zwei Netzen (101, 102) geschätzt wird, wobei das vereinte Netz einen Sensorabstand aufweist, der gleich der Hälfte des Abstands ist, den jedes der Netze (101, 102) aufweist, so dass die Antenne in der Lage ist, mit einem Ausstrahlungssektor zu arbeiten, der bezüglich desjenigen verbreitert ist, der mit jedem der Netze kompatibel ist, wobei das vereinte Netz bei einer synthetischen Antennenverarbeitung genutzt wird.

2.  Antenne nach Anspruch 1, **dadurch gekennzeichnet, dass** in einer besonderen Anwendung der nichtinterferometrischen Bilderzeugung der Ausstrahlungssektor in Seitenpeilung verbreitert ist, und dass das vereinte Netz für die Bildung einer synthetischen Antenne genutzt wird.

3.  Antenne nach Anspruch 1, bei der Hilfs-Ausstrahlungen verwendet werden, um die Selbstkalibrierung durchzuführen, **dadurch gekennzeichnet, dass** der Seitenpeilungssektor mindestens einer Hilfs-Ausstrahlung breiter ist als derjenige, der der Hauptausstrahlung entspricht, und dass das vereinte Netz genutzt wird, um die Selbstkalibrierung der zwei synthetischen Antennen durchzuführen, die mit den empfangenen Signalen geformt werden, die aus der Hauptausstrahlung resultieren.

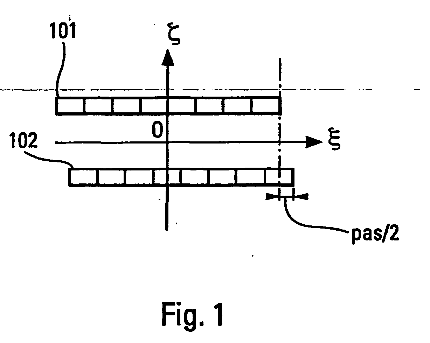

Fig. 1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4400803 A
- FR 2769372
- FR 2738918
- WO 9510953 A

**Littérature non-brevet citée dans la description**

- **DIDIER BILLON ; FRANCK FOHANNO.** THOMSON MARCONI SONAR SAS. IEEE, 965-970